# EUROPEAN PATENT APPLICATION

(11) **EP 4 845 103 A1**
(43) Date of publication of application: **25.11.2026**
(21) Application number: 25742247.7
(22) Date of filing: 16.01.2025
(51) Int. Cl.: H04L 12/28, H01M 10/42, H04W 84/20, H04W 84/12

(54) **CHARGING MODULE AND CHARGING DEVICE COMPRISING SAME**

(30) Priority: 16.01.2024 KR 20240006700; 19.12.2024 KR 20240191315
(71) Applicant: LG Innotek Co., Ltd., Seoul 07796 (KR)
(72) Inventor: CHO, Ig Hyun, Seoul 07796 (KR)
(74) Representative: DREISS Patentanwälte PartG mbB
(86) International application number: PCT/KR2025/000935
(87) International publication number: WO 2025/155108

(57) **Abstract**

An embodiment discloses a charging module comprising: a plurality of charging cells; a plurality of first control devices respectively comprising a plurality of first communication units configured to respectively communicate with the plurality of charging cells; and a second control device comprising a second communication unit communicating with the plurality of first communication units.

## Description

### [Technical Field]

Embodiments relate to a charging module and a charging device including the same.

### [Background Art]

As research and development on electric vehicles, energy storage batteries, robots, and satellites has become increasingly active, research on high-performance batteries that can be repeatedly charged and discharged is also being actively conducted. Currently commercialized battery packs include rechargeable energy storage devices such as nickel-cadmium batteries, nickel-hydrogen batteries, nickel-zinc batteries, and lithium-ion batteries. As battery systems are used in various fields, the capacity of battery systems has been diversified. A large-capacity battery system may be formed by connecting battery modules in parallel.

In this case, a master battery management system (BMS) and a slave BMS inside a battery module may perform wireless communication with each other. However, connectors and cables are still used between battery cells and a slave BMS inside a battery module. Since a large number of battery cells are included inside a battery module, a large number of connectors and cables are used inside the module. Therefore, there are problems such as the potential failure of cables inside a battery module and low workability during manufacturing.

### [Description of Invention]

### [Technical Problem]

Embodiments provide a charging module that allows a configuration required for charging to be simplified, and a charging device including the same.

In addition, there are provided a charging module of which management efficiency can be increased and management costs can be reduced, and a charging device including the same.

In addition, there are provided a charging module in which the number of connectors and cables inside a battery module can be minimized, and a charging device including the same.

In addition, there are provided a charging module of which a manufacturing process can be simplified, and a charging device including the same.

Objects to be solved in the embodiments are not limited thereto, and the embodiments may also include objects or effects that can be understood from the solution or embodiment of the problem described below.

### [Technical Solution]

A charging module according to an embodiment includes a plurality of charging cells, a plurality of first control devices respectively including a plurality of first communication units configured to each communicate with the plurality of charging cells, and a second control device including a second communication unit configured to communicate with the plurality of first communication units.

The plurality of first communication units may be respectively connected to both ends of the plurality of charging cells.

The plurality of charging cells may be connected to each other in series.

Each of the plurality of first communication units may include a first antenna configured to communicate with the second communication unit.

The second communication unit may include a 2-1 antenna and a 2-2 antenna.

The first communication unit may perform near field communication (NFC).

The second communication unit may perform radio frequency (RF) communication.

The 2-1 antenna may communicate with the first antenna of each of the plurality of first communication units.

A length of the 2-1 antenna may be greater than a length of the first antenna.

A communication range of the first antenna may be smaller than a communication range of the 2-2 antenna.

The first control device may include a voltage measurement unit and a temperature measurement unit.

The charging module may include a first connector and a second connector that connect both ends of the plurality of charging cells connected to the second control device in series.

A charging device according to an embodiment may include a plurality of charging modules, and a third control device including a third communication unit configured to communicate with the plurality of charging modules.

The second control device may be a slave battery management system (BMS), and the third control device may be a master BMS.

The plurality of first communication units may transmit information of the plurality of battery cells to the second communication unit, and the second communication unit may transmit information of the plurality of battery cells to the third communication unit.

The first antenna may be disposed to protrude outward from the first control device, and the 2-1 antenna may be disposed to protrude outward from the second control device.

The 2-1 antenna may include a first portion extending toward the first control device and a second portion extending perpendicularly from an end of the first portion, and the second portion may be disposed adjacent to the first antenna.

### [Advantageous Effects]

According to embodiments, there can be provided a charging module that allows a configuration required for charging to be simplified, and a charging device including the same.

In addition, there can be provided a charging module of which management efficiency can be increased and management costs can be reduced, and a charging device including the same.

In addition, there can be provided a charging module in which the number of connectors and cables inside a battery module can be minimized, and a charging device including the same.

In addition, there can be provided a charging module of which a manufacturing process can be simplified, and a charging device including the same.

Various advantageous advantages and effects of the present invention are not limited to the above-described content and may be more readily understood in the course of describing a specific embodiment of the present invention.

### [Description of Drawings]

FIG. 1 is a diagram of a configuration of a charging device according to an embodiment.
FIG. 2 is a diagram of a configuration of a charging module according to an embodiment.
FIG. 3 is a block diagram for describing the charging device according to the embodiment.
FIG. 4 is an exemplary diagram for describing a charging module of a charging device according to an embodiment.
FIG. 5 is an exemplary diagram of a charging device according to an embodiment.

### [Modes of the Invention]

Hereinafter, exemplary embodiments of the present invention will be described with reference to the accompanying drawings.

However, the technical spirit of the present invention is not limited to the few embodiments which will be described and may be realized using various other embodiments, and at least one component of the embodiments may be selectively coupled, substituted, and used to realize the technical spirit within the range of the technical spirit of the present invention.

In addition, unless clearly and specifically defined otherwise by context, all terms (including technical and scientific terms) used herein may be interpreted as having customary meanings to those skilled in the art, and meanings of generally used terms, such as those defined in commonly used dictionaries, will be interpreted by considering contextual meanings of the related technology.

In addition, the terms used in the embodiments of the present invention are for the purpose of describing the embodiments and are not intended to limit the present invention.

In the present specification, unless clearly indicated otherwise by the context, singular forms include the plural forms thereof, and in a case in which "at least one (or one or more) of A, B, and C" is described, this may include at least one combination among all combinations which may be coupled to A, B, and C.

In addition, in descriptions of components of the present invention, terms such as "first," "second," "A," "B," "(a)," and "(b)" may be used.

Such terms are only to distinguish one element from another element, and an essence, order, and the like of the elements are not limited by the terms.

In addition, it should be understood that, when an element is referred to as being "connected or coupled" to another element, such a description may include both of a case in which the element is directly connected or coupled to the other element and a case in which the element is connected or coupled to the other element with still another element disposed therebetween.

In addition, in a case in which any one element is described as being formed or disposed "on or below" another element, such a description includes both cases in which the two elements are formed or disposed in direct contact with each other and in which one or more other elements are interposed between the two elements. In addition, when one element is described as being disposed "on or under" another element, such a description may include a case in which the one element is disposed at an upper side or a lower side with respect to the other element.

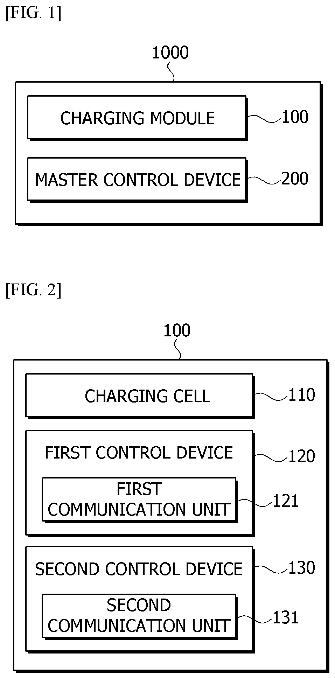

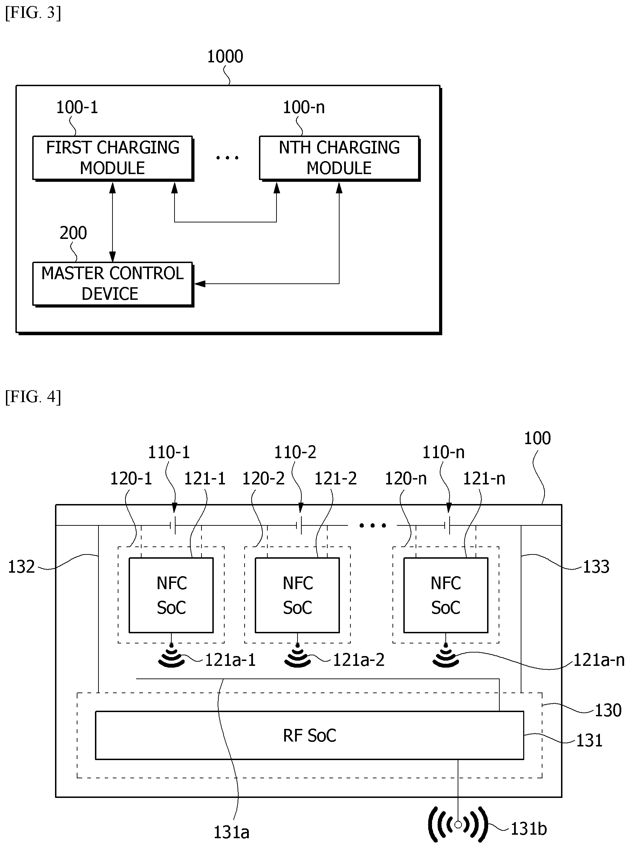

FIG. 1 is a diagram of a configuration of a charging device according to an embodiment. FIG. 2 is a diagram of a configuration of a charging module according to an embodiment. FIG. 3 is a block diagram for describing the charging device according to the embodiment.

Referring to FIGS. 1 to 3, a charging device 1000 according to the embodiment may include a charging module 100 and a master control device 200.

The charging device 1000 may be a battery system. The charging device 1000 may be implemented in a device in which a battery is used. For example, the charging device 1000 may be implemented in an electronic device, an energy storage system, a means of transportation, or the like. The means of transportation may include an electric vehicle or the like.

The charging device 1000 may include the charging module 100. The charging module 100 may include a plurality of charging modules 100-1 to 100-n. The charging module 100 may be a battery pack. The plurality of charging modules 100-1 to 100-n may be connected to each other in series. The plurality of charging modules 100-1 to 100-n may each include a plurality of charging cells. The charging device 1000 may include the master control device 200. The master control device 200 may include a master battery management system (BMS). The master control device 200 may communicate with each of the plurality of charging modules 100 to obtain information of each of the plurality of charging modules 100. The master control device 200 may obtain information such as a voltage, a current, and a temperature of the battery cells constituting the plurality of charging modules 100. In addition, the master control device 200 may determine whether a state of the plurality of charging modules 100 is abnormal. Accordingly, the master control device 200 may transmit a signal for controlling the plurality of charging modules 100. The master control device 200 may include an antenna for communication with the plurality of charging modules 100.

The charging module 100 may be a battery module. The charging module 100 may include a plurality of charging cells 110, a first control device 120, and a second control device 130.

The charging cell 110 may be a battery cell. The charging cell 110 may include a secondary battery. The plurality of charging cells 110 may be connected to each other in series. The plurality of charging cells 110 may each include a positive terminal and a negative terminal. The first control device 120 may communicate with the charging cell 110. A plurality of first control devices 120 may communicate with each of the plurality of charging cells 110 and obtain information of the plurality of charging cells 110. The first control device 120 may include a first communication unit 121 that performs communication. The first control device 120 may transmit the obtained information to the second control device 130. The second control device 130 may include a slave BMS. The second control device 130 may communicate with the plurality of first control devices 120 and the master control device 200. The second control device 130 may receive information of the plurality of charging cells 110 from the plurality of first control devices 120 and transmit the information of the plurality of charging cells 110 to the master control device 200. In addition, the second control device 130 may transmit a signal for controlling the plurality of first control devices 120. The second control device 130 may include a second communication unit 131 that performs communication.

FIG. 4 is an exemplary diagram for describing a charging module of a charging device according to an embodiment.

Referring to FIG. 4, a charging module 100 may include a plurality of charging cells 110-1 and 110-2 to 110-n. For example, the charging module 100 may include 14 charging cells. The plurality of charging cells 110-1 and 110-2 to 110-n may be connected to each other in series. The charging module 100 may include a plurality of first control devices 120-1 and 120-2 to 120-n. The plurality of first control devices 120-1 and 120-2 to 120-n may each control the plurality of charging cells 110-1 and 110-2 to 110-n. In addition, the plurality of first control devices 120-1 and 120-2 to 120-n may each collect information of the plurality of charging cells 110-1 and 110-2 to 110-n. For example, a 1-1 control device 120-1 may control a 1-1 charging cell 110-1 and collect information of the 1-1 charging cell 110-1. The plurality of first control devices 120-1 and 120-2 to 120-n may correspond to the plurality of charging cells 110-1 and 110-2 to 110-n. The plurality of first control devices 120-1 and 120-2 to 120-n may measure a voltage, a current, and a temperature of the charging cells. The plurality of first control devices 120-1 and 120-2 to 120-n may include monitoring units (not shown) that measure a voltage, a current, and a temperature of the charging cells. Information about the charging cells collected by the monitoring units may be transmitted to a second control device 130 through first communication units 121-1 and 121-2 to 121-n.

The plurality of first control devices 120-1 and 120-2 to 120-n may include the first communication units 121-1 and 121-2 to 121-n, respectively. The plurality of first communication units 121-1 and 121-2 to 121-n may each communicate with the plurality of charging cells 110-1 and 110-2 to 110-n and the second control device 130. The plurality of first communication units 121-1 and 121-2 to 121-n may be connected to both ends of the plurality of charging cells 110-1 and 110-2 to 110-n. For example, a first communication unit 121-1 may be connected to both ends of the first charging cell 110-1. Each of the first communication units may include an antenna. The plurality of first communication units 121-1 and 121-2 to 121-n may include first antennas 121a-1 and 121a-2 to 121a-n, respectively. The first communication units 121-1 and 121-2 to 121-n may perform near field communication (NFC) communication. The first communication units 121-1 and 121-2 to 121-n may include NFC system-on-chips (SoCs). The first communication units 121-1 and 121-2 to 121-n may include first antennas 121a-1 and 121a-2 to 121a-n, respectively. The first communication units 121-1 and 121-2 to 121-n may communicate with a second communication unit 131 through the first antennas 121a-1 and 121a-2 to 121a-n. The first antennas 121a-1 and 121a-2 to 121a-n may be disposed adjacent to the second communication unit 131. The first antennas 121a-1 and 121a-2 to 121a-n may be disposed to protrude outward from the first control devices 120-1 and 120-2 to 120-n. The first antennas 121a-1 and 121a-2 to 121a-n may protrude outward from the first control devices 120-1 and 120-2 to 120-n toward the second control device 130.

The charging module 100 may include the second control device 130. The second control device 130 may communicate with the plurality of first control devices 120-1 and 120-2 to 120-n. The second control device 130 may include the second communication unit 131. The second communication unit 131 may perform radio frequency (RF) communication. The second communication unit 131 may include a 2-1 antenna 131a and a 2-2 antenna 131b. The second communication unit 131 may communicate with the first communication units 121-1 and 121-2 to 121-n of the plurality of first control devices 120-1 and 120-2 to 120-n through the 2-1 antenna 131a. The 2-1 antenna 131a may communicate with the plurality of first antennas 121a-1 and 121a-2 to 121a-n. The second communication unit 131 may communicate with a master control device through the 2-2 antenna 131a. In addition, the charging module 100 may include a first connector 132 and a second connector 133 that connect the second control device 130 to a power source. The first connector 132 may be disposed between the second control device 130 and a negative terminal of the first charging cell 110-1. The second connector 133 may be disposed between the second control device 130 and a positive terminal of an n^{th} charging cell 110-n. The second control device 130 may control each of the plurality of first control devices 120-1 and 120-2 to 120-n and receive information about the plurality of charging cells 110-1 and 110-2 to 110-n from the plurality of first control devices 120-1 and 120-2 to 120-n.

The 2-1 antenna 131a and the 2-2 antenna 131b may be disposed to protrude outward from the second control device 130. The 2-1 antenna 131a may protrude in a direction from the second communication unit 131 toward the first control device 120. The 2-1 antenna 131a may protrude in a direction toward the plurality of first antennas 121a-1 and 121a-2 to 121a-n of the first control devices 120 and may be disposed adjacent to the plurality of first antennas 121a-1 and 121a-2 to 121a-n. Accordingly, the 2-1 antenna 131a may perform communication at a position proximate to the plurality of first antennas 121a-1 and 121a-2 to 121a-n. The 2-1 antenna 131a may communicate with each of the plurality of first antennas 121a-1 and 121a-2 to 121a-n. The 2-1 antenna 131a may include a first portion protruding toward the first control device 120 and a second portion extending perpendicularly from an end of the first portion. The second portion may be disposed adjacent to the plurality of first antennas 121a-1 and 121a-2 to 121a-n to perform communication. The 2-2 antenna 131b may protrude in a direction opposite to the 2-1 antenna 131a. Accordingly, the 2-2 antenna 131b may communicate with a master control device 200 disposed outside the charging module 100.

A length of the 2-1 antenna 131a may be greater than a length of each of the first antennas 121a-1 and 121a-2 to 121a-n. Accordingly, the 2-1 antenna 131a may communicate with each of the plurality of first antennas 121a-1 and 121a-2 to 121a-n at a close distance. The second portion of the 2-1 antenna 131a may extend in a direction in which the plurality of first control devices 120-1 and 120-2 to 120-n are disposed and may be disposed adjacent to each of the plurality of first antennas 121a-1 and 121a-2 to 121a-n of the plurality of first control devices 120-1 and 120-2 to 120-n. Accordingly, the 2-1 antenna 131a may be disposed to extend by a length substantially corresponding to a width by which the plurality of first control devices 120-1 and 120-2 to 120-n are arranged. A shape of the 2-1 antenna 131a may vary according to an arrangement shape of the plurality of first control devices 120-1 and 120-2 to 120-n. When the plurality of first control devices 120-1 and 120-2 to 120-n are disposed in a plurality of rows or columns, the 2-1 antenna 131a may be disposed in a zigzag shape adjacent to each control device.

The first control device 120 and the second control device 130 may perform NFC communication with each other. A communication range of the first antenna 121a-1 and 121a-2 to 121a-n may be smaller than a communication range of the 2-2 antenna 131b. Accordingly, the generation of noise during a communication process can be reduced, the accuracy of shortrange communication can be improved, and low-power driving can be performed. Since a communication range of the 2-2 antenna 131b is wide, a length of the 2-2 antenna 131b may be reduced.

A charging module according to embodiments includes a first control device that controls each of a plurality of charging cells, thereby increasing the management efficiency of the charging cells and enabling precise control. In addition, since a plurality of first control devices each perform NFC communication with a second control device, charging cells may not be directly connected to a second control device which is a slave control module, and the number of connectors and cables connecting the charging cells to a control device can be minimized. Accordingly, the configuration of the charging module can be simplified.

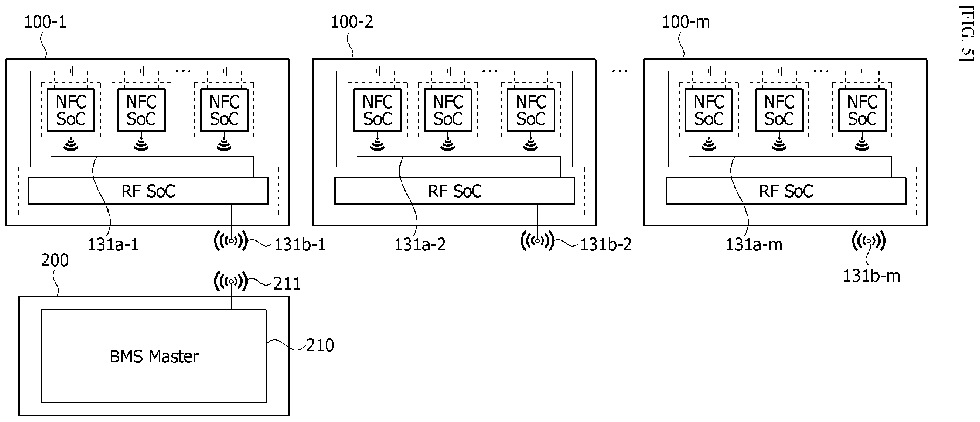

FIG. 5 is an exemplary diagram of a charging device according to an embodiment.

Referring to FIG. 5, a charging device 1000 according to the embodiment may include a plurality of charging modules 100-1 and 100-2 to 100-m and a third control device 200 including a third communication unit 210 that communicates with the plurality of charging modules 100-1 and 100-2 to 100-m.

The charging device 1000 may include the plurality of charging modules 100-1 and 100-2 to 100-m. For example, the charging device 1000 may include 10 to 16 charging modules. The plurality of charging modules 100-1 and 100-2 to 100-m may communicate with the third control device 200. In addition, the plurality of charging modules 100-1 and 100-2 to 100-m may communicate with each other. The third control device 200 may be a master control module. The third control device 200 may include the third communication unit 210, and the third communication unit 210 may include a third antenna 211 that performs communication. 2-2 antennas 131a-1 and 131a-2 to 131a-n of the plurality of charging modules 100-1 and 100-2 to 100-m may communicate with the third antenna 211 of the third control device 200. The third control device 200 may obtain information such as a voltage, a current, and a temperature of battery cells from the plurality of charging modules 100-1 and 100-2 to 100-m, and the third control device 200 may transmit a signal for controlling the battery cells to the plurality of charging modules 100-1 and 100-2 to 100-m.

While the present invention has been described with reference to embodiments, this is merely an example and is not intended to limit the present invention, and those skilled in the art to which the present invention pertains will be able to understand that various modifications and applications not exemplified above are possible without departing from the essential characteristics of the present embodiment. For example, each component specifically shown in the embodiment may be implemented with modifications. In addition, differences related to the modifications and applications should be construed as being included in the scope of the present invention defined in the appended claims.

## Claims

1. A charging module comprising:
a plurality of charging cells;
a plurality of first control devices respectively including a plurality of first communication units configured to respectively communicate with the plurality of charging cells; and
a second control device including a second communication unit configured to communicate with the plurality of first communication units.

2. The charging module of claim 1, wherein the plurality of first communication units are respectively connected to both ends of the plurality of charging cells.

3. The charging module of claim 2, wherein the plurality of charging cells are connected to each other in series.

4. The charging module of claim 1, wherein each of the plurality of first communication units includes a first antenna configured to communicate with the second communication unit.

5. The charging module of claim 4, wherein the second communication unit includes a 2-1 antenna and a 2-2 antenna.

6. The charging module of claim 1, wherein the first communication unit performs near field communication (NFC).

7. The charging module of claim 1, wherein the second communication unit performs radio frequency (RF) communication.

8. The charging module of claim 5, wherein the 2-1 antenna communicates with the first antenna of each of the plurality of first communication units.

9. The charging module of claim 8, wherein a length of the 2-1 antenna is greater than a length of the first antenna.

10. The charging module of claim 9, wherein a communication range of the first antenna is smaller than a communication range of the 2-2 antenna.
